(19) Europäisches Patentamt

European Patent Office

Office européen des brevets

(11) **EP 0 587 232 B1**

## (12) FASCICULE DE BREVET EUROPEEN

(45) Date de publication et mention
de la délivrance du brevet:
**01.03.2000 Bulletin 2000/09**

(51) Int. Cl.⁷: **G06T 9/20**

(21) Numéro de dépôt: **93202547.1**

(22) Date de dépôt: **01.09.1993**

(54) **Dispositif de codage d'images fixes**

Vorrichtung zur Kodierung von unbeweglichen Bildern

Still image coding device

(84) Etats contractants désignés:
**DE FR GB**

(30) Priorité: **09.09.1992 FR 9210757**

(43) Date de publication de la demande:
**16.03.1994 Bulletin 1994/11**

(73) Titulaires:
- **LABORATOIRES D'ELECTRONIQUE PHILIPS S.A.S.**
  **94450 Limeil-Brévannes (FR)**
  Etats contractants désignés:
  **FR**
- **Koninklijke Philips Electronics N.V.**
  **5621 BA Eindhoven (NL)**
  Etats contractants désignés:
  **DE GB**

(72) Inventeurs:
- **Oddou, Christophe**
  **F-75008 Paris (FR)**
- **Sirat, Jacques**
  **F-75008 Paris (FR)**

(74) Mandataire:
**Landousy, Christian et al**
**Société Civile S.P.I.D.**
**156, Boulevard Haussmann**
**75008 Paris (FR)**

(56) Documents cités:
- **COMPUTER VISION GRAPHICS AND IMAGE PROCESSING vol. 53, no. 3 , Mai 1990 , DULUTH, MA US pages 313 - 321 XP203298 YUH-TAY LIOW 'a contour tracing algorithm that preserves common boundaries between regions'**

## Description

La présente invention concerne un dispositif de codage d'images fixes comprenant des moyens de segmentation desdites images en régions homogènes auxquelles est attaché un label spécifique et des moyens de codage du contenu et du contour desdites régions, lesdits moyens de codage du contour consistant en un sous-ensemble de codage d'informations de contour qui comprend lui-même des moyens de détection des contours dans l'image à coder. Un tel dispositif est utilisable notamment dans le domaine de la transmission et/ou du stockage d'images fixes, par exemple dans des applications telles que celles impliquant un dispositif "Minitel" ou similaire.

Depuis une dizaine d'années, de nouvelles techniques de codage sont apparues pour le codage d'images fixes, et, entre autres, celle reposant sur le principe de la segmentation d'une image en tout un ensemble de régions préservant cependant les contours correspondant aux objets présents dans l'image. L'article "Recent results in high-compression image coding", de M. Kunt, M. Bénard et R. Leonardi, paru dans IEEE Transactions on Circuits and Systems, vol.CAS-34, n°11, novembre 1987, pp.1306-1336, décrit dans sa partie IV, "Adaptive split-and-merge", les principes de mise en oeuvre de cette technique.

Dans ses grandes lignes, la technique de codage d'image par segmentation consiste à déterminer dans l'image, selon certains critères, des régions pouvant être considérées comme relativement homogènes (c'est-à-dire à variation faible, ou nulle, de la luminosité) et à rechercher une représentation symbolique des régions ainsi déterminées, tout en conservant les informations relatives aux contours desdites régions. Cette représentation symbolique est en général obtenue en recherchant au moins une approximation de caractéristiques spécifiques de chacune de ces régions, et un codage à taux de compression assez élevé peut alors être obtenu en appliquant la procédure de codage aux symboles ainsi définis.

La segmentation proprement dite est, plus précisément, obtenue en recherchant un modèle mathématique ou statistique qui traduise de façon correcte les variations spatiales de la luminosité (ou niveau de gris) de l'image, ce qui est par exemple réalisé à l'aide de fonctions polynomiales d'ordre peu élevé. Dans le cas présent où les régions sont relativement homogènes, le codage des informations représentatives du contenu de ces régions ne pose pas de problème majeur. La forme et la position de chacune des régions sont, elles, définies par son contour, qui doit être codé de manière sûre. Un codage exact de chaque contour complet est, de ce fait, le moyen le plus simple de transmettre fidèlement la chaîne des points successifs constituant un contour, par exemple en fournissant l'adresse d'un premier point du contour à l'aide de ses coordonnées réelles puis en en déduisant les points suivants par une succession d'informations prises parmi trois symboles possibles : tourner à gauche, tourner à droite, aller tout droit, ce qui suffit à construire la chaîne de contour.

Malheureusement, si, à l'heure actuelle, on dispose donc de procédés qui semblent satisfaisants pour le codage, avec compression de données, de la texture des régions d'image ou, plus généralement, de leur contenu, il n'en est pas de même des contours qui, étant d'autant plus nombreux que les régions le sont elles-mêmes, restent très coûteux en matière de codage du fait qu'ils représentent une part très importante des signaux à coder.

Le but de l'invention est donc de proposer un dispositif de codage d'images autorisant une importante compression de données grâce à un codage des contours d'efficacité très améliorée par rapport aux réalisations antérieures.

A cet effet, l'invention concerne un dispositif de codage tel que défini dans le préambule de la présente description et qui est caractérisé en ce que lesdits moyens de codage du contour comprennent également :

    a) des moyens de détection, sur le contour de chaque région successivement considérée, de points triples, appartenant à au moins deux contours de région et appelés à constituer une série de points de contrôle de ladite région considérée;

    b) sur la base de critères de validité géométrique, des moyens de transformation conditionnelle en un segment de droite de chacun des fragments de contour joignant deux points de contrôle successifs dans le sens du suivi du contour au moins un point de contrôle supplémentaire étant introduit dans ladite série entre les deux points de contrôle concernés lorsqu'au moins un des critères de validité n'est pas vérifié, et ceci jusqu'à ce qu'ils le soient, et ladite transformation étant appliquée à chaque paire de points de contrôle successifs, jusqu'à rebouclage complet du contour, puis reprise de façon similaire pour toutes les régions de chaque image;

    c) des moyens de codage du contour polygonal constitué par la succession des segments ainsi obtenus.

Un des aspects essentiels de la structure ainsi proposée est de remplacer l'analyse locale très détaillée des contours par une analyse reposant sur une définition modifiée des formes des régions. Plus précisément, aux contours des régions définies à l'origine par la segmentation sont substituées des formes polygonales, donc beaucoup plus simples mais qui en constituent d'excellentes approximations, sous réserve que quelques critères géométriques simples soient vérifiés.

Le document "A contour tracing algorithm that preserves common boundaries between regions", de Y.-T. Liow, paru dans "Computer Vision Graphics and Image Processing", vol.53, n°3, mai 1990, pp.313-321, décrit bien un dispositif de détection de contour dans des images segmentées, mais qui envisage un problème technique distinct de celui pris en compte dans le cas de l'invention. Dans ce document, il s'agit en effet de corriger si nécessaire le tracé d'un contour si la frontière entre deux régions passe entre deux points d'image. Cette correction va dans le sens d'une restitution plus fidèle du contour concerné. Au contraire, dans le cas de l'invention, il s'agit, sur la base de quelques critères géométriques garantissant que les contours ne seront pas dénaturés, de procéder au remplacement d'un contour déterminé par un contour au tracé plus simple, ce contour approximatif permettant un codage lui aussi plus simple.

Les particularités et avantages de l'invention apparaîtront maintenant de façon plus détaillée dans la description qui suit et dans les dessins annexés, donnés à titre d'exemples non limitatifs et dans lesquels :

- la figure 1 montre un exemple de réalisation d'un dispositif de codage conforme à l'invention;
- la figure 2 montre un exemple de réalisation d'un sous-ensemble de codage d'informations de contour présent dans le dispositif de la figure 1;
- les figures 3 et 4 illustrent la manière dont sont définis sur les contours d'une région des points de contrôle appelés à rester invariants dans le traitement effectué sur les images, la figure 3 montrant les quatre voisinages possibles d'un point d'image (ou pixel) et la figure 4 montrant des exemples de tels points de contrôle ;
- la figure 5 illustre la transformation effectuée sur les contours des régions conformément à l'invention, et les figures 6 à 9 représentent diverses situations particulières pour lesquelles ladite transformation n'est pas acceptable et ne peut pas être validée ;
- les figures 10 et 11 illustrent la situation où, la transformation n'étant pas acceptable, le segment S qui serait issu de cette transformation doit être remplacé par deux segments S' et S" faisant intervenir un point de contrôle supplémentaire M ;
- la figure 12 illustre les conséquences de ladite transformation pour les points d'image qui, par suite de celle-ci, changent de région d'affectation.

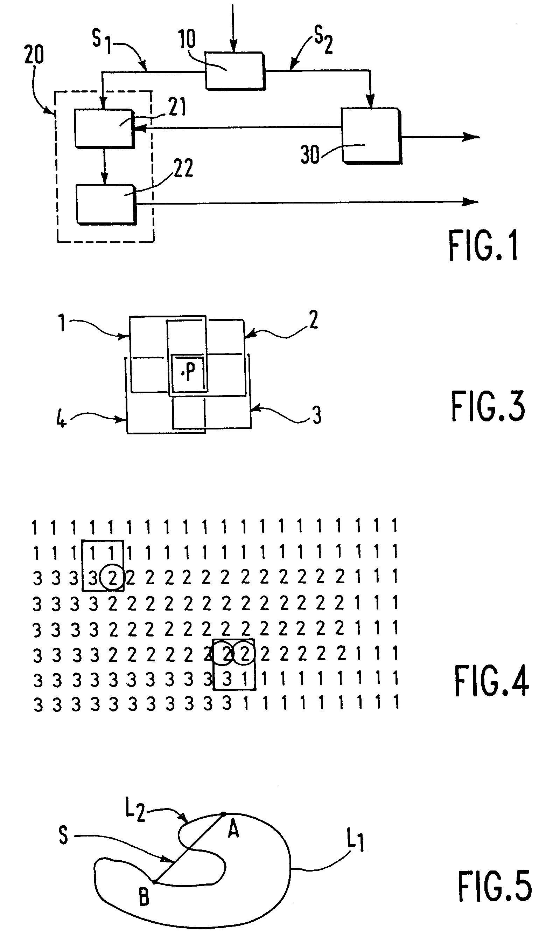

Le dispositif de codage d'images, représenté dans un exemple particulier de réalisation sur la figure 1, comprend tout d'abord un sous-ensemble de segmentation 10, destiné à réaliser dans les images une subdivision par régions homogènes, c'est-à-dire à variation faible ou nulle de la luminosité, et modélisable par approximation polynomiale. La segmentation est ici réalisée selon un procédé dit "split and merge" décrit par exemple dans le document déjà cité (p.1322 et suivantes), et dont on ne reprendra pas la description détaillée. On rappelle simplement que ce procédé prévoit d'abord une division de l'image en carrés et la recherche, pour chaque carré, du polynôme qui décrit le mieux les variations du niveau de gris dans ce carré, selon un premier critère déterminé (et par exemple en appliquant la méthode des moindres carrés). Si l'erreur d'approximation entre ce polynôme et le carré d'origine concerné dépasse un seuil déterminé, ce carré est divisé en quatre nouveaux carrés, auxquels on applique à nouveau le même procédé, et ainsi de suite chaque fois que nécessaire. En utilisant alors un deuxième critère de comparaison entre régions adjacentes, reposant par exemple sur la plus ou moins grande similarité entre les deux régions concernées, on procède alors à la fusion des régions adjacentes satisfaisant ce critère, cette réduction du nombre de régions étant éventuellement poursuivie jusqu'à atteindre un nombre final de régions de valeur donnée.

Le sous-ensemble 10 permet donc, par l'application de ce procédé, de disposer sur des première et deuxième sorties $S_1$ et $S_2$ d'une part d'un jeu de coefficients polynomiaux exprimant le contenu des régions issues de la segmentation, et d'autre part d'un jeu de labels (ou étiquettes) définissant l'appartenance des pixels à telle ou telle région (et équivalant donc à des informations de contour). La première sortie $S_1$, qui délivre les coefficients polynomiaux, est envoyée vers un sous-ensemble 20 de codage des informations de texture de chaque région, et la deuxième sortie $S_2$, qui délivre les labels, est envoyée vers un sous-ensemble 30 de codage des informations de contour.

Le sous-ensemble 20, représenté directement sur la figure 1, comprend, en série, une mémoire 21 de stockage des coefficients polynomiaux et un circuit 22 de codage des coefficients ainsi stockés. L'exécution effective du codage est commandée comme on le verra plus loin par le sous-ensemble 30. Ce codage des coefficients polynomiaux est réalisé de façon connue, par exemple par un codage sur 8 bits de chaque expression polynomiale. Si les polynômes à coder sont en effet de la forme $z=a+bx+cy$ , il suffit, pour la définition du plan représentatif de cette expression, de connaître dans ce plan trois points non colinéaires, dont on notera $z_1$, $z_2$, $z_3$ les amplitudes correspondantes, et de coder alors ces valeurs $z_1$, $z_2$, $z_3$, ou bien de coder l'une d'entre elles, $z_1$ par exemple, de façon absolue et les deux autres en codant non pas $z_2$ et $z_3$ mais les différences $z_2 - z_1$, de telles variantes ne constituant bien entendu en aucun cas une limitation de l'invention.

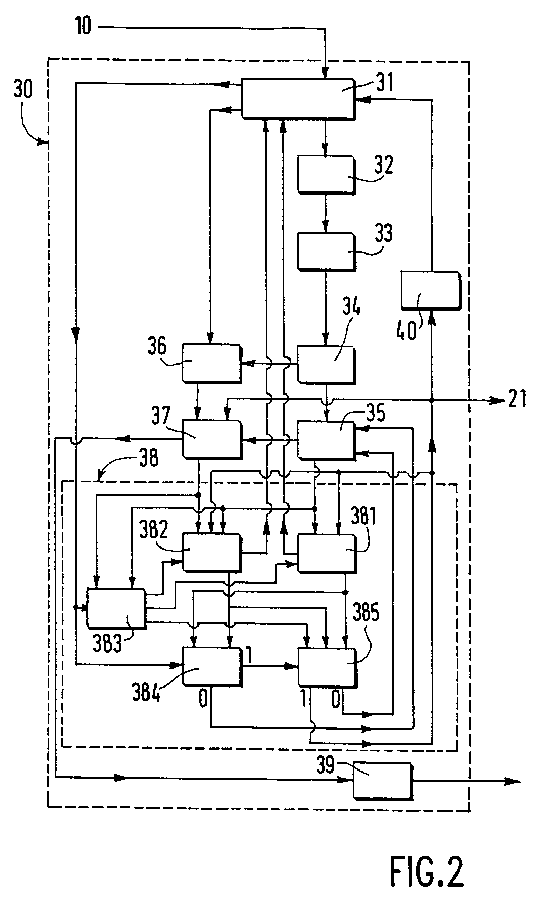

Le sous-ensemble 30, représenté plus en détail sur la figure 2 dans un exemple particulier de réalisation, comprend tout d'abord une mémoire 31 de stockage des labels. Cette mémoire 31 est suivie d'un circuit 32 de détection de contour qui, à l'aide d'un balayage quelconque et par exemple ligne par ligne ou colonne par colonne, examine successivement tous les labels et détecte un contour lorsqu'il décèle un changement de label (à chaque région correspond, on l'a vu, un label distinct). Une mémoire d'images 33 prévue en sortie du circuit 32 assure le stockage des contours ainsi détectés, par exemple en mettant aux niveaux de luminosité respectivement maximal et minimal les pixels situés sur le contour et ceux situés partout ailleurs, de part et d'autre de ce contour, puis un circuit 34 de suivi de contour prélève dans la mémoire 33 et reconstitue successivement le contour de chaque région courante à traiter, pour le mémoriser dans une mémoire 35 sous la forme de la chaîne des coordonnées des pixels concernés.

La mémoire 31 est également suivie, en série, d'un circuit 36 de détection de points triples et d'une mémoire 37 de stockage de ces points triples, dits points de contrôle. En effet, on a vu qu'aux contours d'origine des régions on voulait substituer des formes polygonales plus simples. Sur ces contours comme sur lesdites formes polygonales, les points triples sont des points de repérage essentiels correspondant aux points de contact d'au moins trois régions, et ces points ne doivent donc pas subir de modifications. La transformation éventuelle du contour d'origine en une forme polygonale plus simple n'est effectuée, si elle est justifiée comme on le verra plus loin, que sur la chaîne de contour qui relie deux points triples, sans affecter ces derniers en aucune manière.

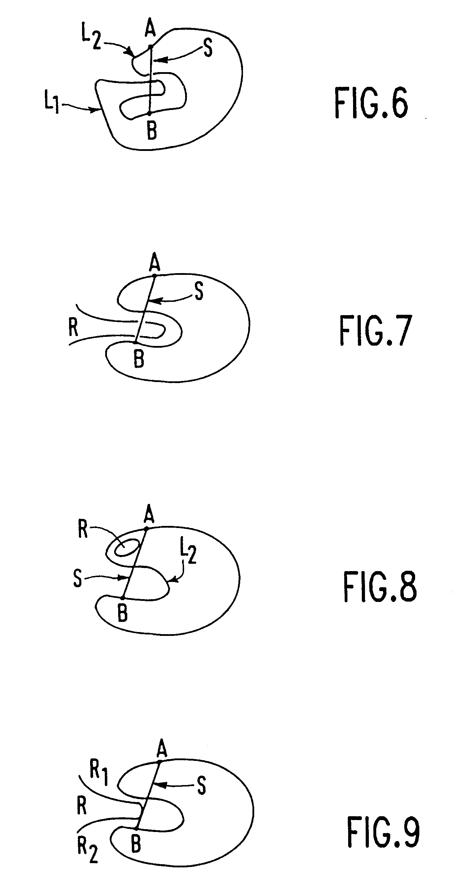

La détection de ces points triples est effectuée région par région et de la manière suivante. Pour chaque point P du contour mémorisé de la région courante concernée, on examine, comme indiqué sur la figure 3, chacun des quatre voisinages possibles 1 à 4. Si l'un de ces voisinages contient trois labels distincts, le point P est alors considéré comme un point triple appartenant à la chaîne des points de contrôle essentiels. Ce point triple est stocké dans la mémoire 37, sauf si celle-ci contient déjà un point triple voisin caractérisé par le même voisinage. La figure 4, qui représente les labels d'une partie d'image, montre un exemple dans lequel cette situation survient. Dans la région à laquelle correspond le label 2, le point 2 entouré d'un cercle dans le carré situé en haut et à gauche correspond à un point triple simple. Par contre, dans le carré inférieur, deux points 2 voisins peuvent avoir droit à être déclarés point triple, mais l'un deux seulement, par exemple le premier rencontré dans le sens du balayage, est stocké dans la mémoire 37, l'autre faisant double emploi.

Lorsque tous les points triples du contour de la région courante ont été détectés et stockés, une transformation est effectuée sur l'une des deux sous-chaînes de contour joignant deux points de contrôle successifs, et ce pour toutes les paires de points de contrôle pris deux à deux en se suivant. Pour un couple donné de deux points de contrôle A et B (voir la figure 5), la totalité de la chaîne de contour est constituée de deux sous-chaînes $L_1$ et $L_2$, la sous-chaîne $L_1$ qui est laissée telle quelle et la sous-chaîne $L_2$ qui est remplacée par un segment de droite S.

La transformation ainsi effectuée n'est cependant valable, et donc validée, que si certaines contraintes topologiques, illustrées à l'aide des figures 6 à 9, sont satisfaites. En effet, il faut vérifier :

- que le segment S remplaçant la sous-chaîne $L_2$ ne coupe pas la sous-chaîne $L_1$ (situation représentée sur la figure 6) ;
- qu'une autre région R n'est pas traversée par le segment de remplacement S (situation représentée sur la figure 7) ;
- que le remplacement de $L_2$ par S n'élimine pas une autre région R incluse dans la région courante (situation représentée sur la figure 8) ;
- que le segment S créé n'est pas tangent à une région R en en étranglant une autre qui, de ce fait, se trouve alors artificiellement coupée en deux régions distinctes $R_1$ et $R_2$ (situation représentée sur la figure 9).

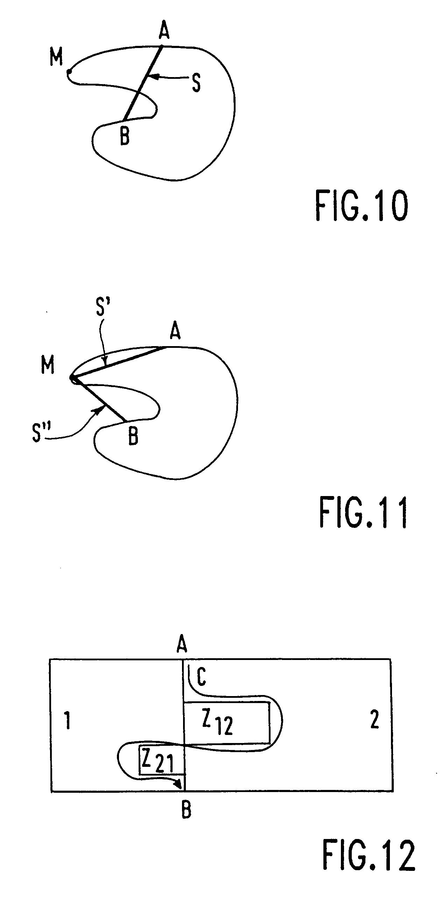

Quand l'une des situations ainsi définies est rencontrée, la nouvelle configuration correspondante n'est pas acceptable, et la transformation ne doit pas être faite de cette manière. Il faut en effet créer entre les deux points de contrôle concernés un point de contrôle supplémentaire (voir la figure 10), qui est de préférence le point M du contour d'origine le plus éloigné du segment S non acceptable, ou un point voisin, puis joindre A et M, ainsi que B et M, pour constituer deux nouveaux segments S' et S" (voir la figure 11). La vérification que les contraintes topologiques citées plus haut sont satisfaites est alors reprise successivement pour les deux nouveaux segments S' et S" ainsi créés.

Les différents tests relatifs à la validité de la transformation en segment de chaque sous-chaîne de contour joignant deux points de contrôle sont réalisés dans un étage de test 38, visible sur la figure 2. Cet étage comprend tout d'abord deux mémoires 381 et 382 pour le stockage respectif des labels avant transformation (la mémoire 381 contient donc les informations de forme de la région avant la transformation en segment) et des labels après transformation (la mémoire 382 contient donc les informations de forme de la région après ladite transformation). La mémoire 381 reçoit la sortie de la mémoire 35, et la mémoire 382 reçoit les sorties des mémoires 35 et 37. Les sorties respectives de ces mémoires 381 et 382 sont reliées A la mémoire 31 de stockage des labels pour la mise à jour de ceux-ci après chaque transformation.

L'étage 38 contient également un circuit 383 de détermination des labels correspondant aux régions adjacentes à la région courante, ce circuit 383 étant relié aux mémoires 31, 35 et 37. Un circuit de comparaison 384, qui reçoit les sorties des mémoires 31, 381 et 382 permet alors de vérifier que les contraintes topologiques citées plus haut sont satisfaites. Si ce n'est pas le cas, il faut introduire entre les deux points de contrôle concernés un nouveau point de contrôle et reprendre les mêmes tests. La sortie logique (notée 0) du circuit 384 commande donc dans ce cas le transfert d'un point de contrôle supplémentaire (pris sur le contour d'origine comme indiqué plus haut en référence aux figures 10 et 11) de la mémoire 35 vers la mémoire 37.

Si au contraire lesdites contraintes topologiques sont vérifiées, la sortie logique du circuit 384 est notée 1 et un circuit de calcul et de comparaison 385, qui reçoit les sorties des mémoires 381 et 382 et celle du circuit 383 et qui est commandé par cette sortie logique 1, entre en fonctionnement pour évaluer l'erreur d'approximation qui résulte de la transformation. Comme le montre la figure 12 qui montre de façon schématique le remplacement du contour entre des régions 1 et 2 (ce contour appelé C est celui qui, sur la figure, suit le mouvement de la flèche) par le segment joignant les deux points de contrôle A et B, des labels ont changé de valeur dans les zones notées $Z_{12}$ et $Z_{21}$ qui changent de région. L'erreur est par exemple évaluée à l'aide de la formule suivante :

$$e=\sum_{Z_{21}} (p_1(i,j)-I(i,j))^2+\sum_{Z_{12}} (p_2(i,j)-I(i,j))^2$$

dans laquelle :

- I(i,j) désigne la luminosité d'origine du pixel (i, j) considéré, dans la zone $Z_{21}$ ou $Z_{12}$ selon le cas :
- $p_1(i,j)$ et $p_2(i,j)$ désignent la valeur prise par le polynôme de la région concernée pour le pixel considéré dans sa nouvelle région de rattachement.

Si cette erreur dépasse un certain seuil prédéterminé (sortie 0 du circuit 385), la déformation de l'image est considérée comme inacceptable et, comme précédemment, il faut, sur commande de ladite sortie 0, introduire entre les deux points de contrôle concernés un nouveau point de contrôle. La procédure décrite est alors reprise, y compris les tests effectués par le circuit de comparaison 384. Si au contraire l'erreur ne dépasse pas ledit seuil, la transformation en segment de la partie de contour d'origine située entre les deux points de contrôle est acceptée (sortie 1 du circuit 385) et il faut, sur commande de ladite sortie (qui envoie également aux mémoires 381 et 382 l'ordre de mise à jour de la mémoire 31), passer au point de contrôle suivant de la chaîne des points de contrôle stockée dans la mémoire 37, et voir si la partie de contour située entre ce point de contrôle suivant et le point de contrôle qui le précède peut à son tour être transformée en segment. La procédure précédemment décrite est donc intégralement reprise.

Si le contour de la région a été entièrement décrit et que, étant revenu aux deux premiers points de contrôle, toutes les possibilités de transformation de parties de contour en segment ont été examinées (et acceptées ou refusées comme indiqué ci-dessus) la sortie 1 du circuit 385 commande non plus le passage à un point de contrôle suivant mais, par action sur le circuit 37, l'envoi de la sortie de cette mémoire 37 vers un circuit 39 de codage du contour polygonal fermé maintenant présent dans ladite mémoire. Une commande similaire (représentée sur les figures 1 et 2) envoyée vers la mémoire 21 du sous-ensemble 20 valide parallèlement l'exécution du codage des coefficients polynomiaux par le circuit 22, puis est également fournie à un circuit de séquencement 40 dont la sortie commande la réinitialisation de toute la procédure ici décrite pour une nouvelle région (et ainsi de suite jusqu'à épuisement de toutes les régions).

Comme précédemment pour les valeurs $z_1$, $z_2$, $z_3$, on peut dans le circuit de codage 39 soit coder de façon absolue les informations relatives à chaque point de contrôle, soit les coder de toute autre manière et par exemple coder de façon absolue celles relatives à un seul de ces points et de manière relative (notamment par des différences comme précédemment, ou à l'aide des composantes vectorielles permettant de passer d'un point de contrôle au suivant) les informations relatives aux autres points de contrôle.

Les signaux de sortie du dispositif de codage selon l'invention sont disponibles en sortie du circuit 22, dans le sous-ensemble 20, et en sortie du circuit 39, dans le sous-ensemble 30.

Bien entendu, la présente invention n'est pas limitée aux exemples de réalisation ci-dessus décrits et représentés, à partir desquels des variantes peuvent être proposées sans pour cela sortir du cadre de l'invention. En particulier, lorsque la totalité du contour d'une région a été transformée en un contour polygonal, il peut arriver que deux segments successifs dudit contour polygonal, faisant donc intervenir trois points de contrôle successifs, soient apparus à l'occasion de deux transformations en segment successives et autonomes, et non pas par création d'un point de contrôle intermédiaire, et qu'il faille alors examiner si ces deux segments ne peuvent pas être remplacés par un seul reliant, parmi les trois points de contrôle concernés, les deux points extrêmes et éliminant donc du contour polygonal final le point de contrôle médian. Pour un tel examen, il suffit de reconsidérer trois par trois tous les points de contrôle du contour polygonal obtenu après un premier suivi du contour d'origine de la région et de leur appliquer la procédure précédemment décrite. Cette réinitialisation de toute ladite procédure peut être commandée, comme indiqué sur la figure 2, par la connexion reliant la sortie 1 du circuit 385 à la mémoire 37. Dans ce cas, cette même connexion ne validera les codages effectués par les circuits 22 et 39 qu'après la fin de ce deuxième examen impliquant les points de contrôle trois par trois.

On notera d'ailleurs que ce deuxième examen n'aboutit à un remplacement de deux segments par un seul que dans un nombre de situations assez faible par rapport au nombre de situations considérées lors du premier examen. En effet, comme on vient de le dire, ce remplacement ne peut pas se produire, pour les trois points de contrôle considérés, dans la situation où le point de contrôle médian est un point de contrôle intermédiaire volontairement créé après une transformation non validée lors du premier examen. Il ne peut pas non plus se produire dans la situation où les deux points de contrôle extrêmes des trois points considérés sont l'un et l'autre des points triples.

## Revendications

**1.** Dispositif de codage d'images fixes comprenant des moyens (10) de segmentation desdites images en régions homogènes auxquelles est attaché un label spécifique et des moyens (20, 30) de codage du contenu et du contour desdites régions, lesdits moyens de codage du contour consistant en un sous-ensemble (30) de codage d'informations de contour qui comprend lui-même des moyens (31, 32, 33) de détection des contours dans l'image à coder, caractérisé en ce que lesdits moyens de codage du contour comprennent également :

   a) des moyens (34, 35, 36, 37) de détection, sur le contour de chaque région successivement considérée, de points triples, appartenant à au moins deux contours de région et appelés à constituer une série de points de contrôle de ladite région considérée ;
   b) sur la base de critères de validité géométrique, des moyens de transformation conditionnelle en un segment de droite de chacun des fragments de contour joignant deux points de contrôle successifs dans le sens du suivi du contour, au moins un point de contrôle supplémentaire étant introduit dans ladite série entre les deux points de contrôle concernés lorsqu'au moins un des critères de validité n'est pas vérifié, et ceci jusqu'à ce qu'ils le soient, et ladite transformation étant appliquée à chaque paire de points de contrôle successifs, jusqu'à rebouclage complet du contour, puis reprise de façon similaire pour toutes les régions de chaque image;
   c) des moyens (39) de codage du contour polygonal constitué par la succession des segments ainsi obtenus.

**2.** Dispositif selon la revendication 1, caractérisé en ce que lesdits moyens de détection de points de contrôle comprennent, pour chaque contour de région détecté, un circuit (34) de suivi de ce contour, une mémoire (35) des coordonnées des points d'image successivement rencontrés sur ce contour, un circuit de détection, sur ce contour, des points dits triples situés au contact de trois régions au moins, et une mémoire (37) de stockage de ces points triples, également reliée à la sortie de la mémoire (35) des coordonnées du contour de la région courante considérée.

**3.** Dispositif selon l'une des revendications 1 et 2, caractérisé en ce que lesdits moyens de transformation consistent en un étage de test 38 comprenant luimême deux mémoires de labels (381, 382), pour le stockage des labels respectivement avant et après transformation, un circuit (383) de détermination des labels correspondant aux régions adjacentes à la région courante, dont la sortie est fournie auxdites mémoires de labels, un circuit (384) de comparaison, destiné à interdire ladite transformation dans un certain nombre de situations géométriques prédéterminé, et un circuit (385) de calcul et de comparaison, pour la validation ou non de la transformation selon la plus ou moins grande valeur d'erreur d'approximation qui résulte de cette transformation.

**4.** Dispositif selon l'une des revendications 1 à 3, caractérisé en ce qu'il comprend des moyens de commande pour la réinitialisation de la procédure de transformation, sous réserve de la validité de celle-ci comme précédemment, mais cette fois pour chaque ensemble de trois points de contrôle successifs du contour de chaque région considérée et jusqu'à rebouclage complet du contour.

## Claims

**1.** A device for coding still images, comprising means (10) for segmenting said images into homogeneous regions whereto a specific label is attached and means (20,30) for coding the contents and the contour of said regions, which means for coding the contour consist of a sub-assembly (30) for coding contour information which itself comprises means (31,32,33) for detecting contours in the image to be coded, characterized in that said contour coding means also comprise:

   a) means (34,35,36,37) for detecting, on the contour of each region successively considered, points which are referred to as triplets, relate to at least two contours of the region and are used to form a series of control points of the region considered;
   b) means for conditionally transforming, on the basis of geometrical validity criteria, each contour fragment joining two successive control points in the direction in which the contour is followed into a straight segment, at least one supplementary control point being introduced into said series between the two control points concerned when at least one of the validity criteria is not verified, and so on until they are, said transformation being applied to each pair of successive control points until the contour loop is completely closed again, after which it is repeated in a similar manner for all regions of each image:

c) means (39) for coding the polygonal contour formed by the succession of segments thus obtained.

2. A device as claimed in Claim 1, characterized in that said means for detecting control points comprise, for each contour of the detected region, a circuit (34) for tracking this contour, a memory (35) for storing coordinates of image points successively encountered on this contour, a circuit for detecting on this contour points which are referred to as triplets and are situated at the area of contact of at least three regions, and a memory (37) for storing these triplets which is also connected to the output of the memory (35) for storing the coordinates of the contour of the current region being considered.

3. A device as claimed in one of the Claims 1 and 2, characterized in that said means for transformation consist of a test stage (38) which itself comprises two label memories (381,382) for the storage of labels before and after transformation, respectively, a circuit (383) for determining labels corresponding to the regions adjoining the current region whose output signal is applied to said label memories, a comparison circuit (384) which is intended to inhibit said transformation in a given number of predetermined geometrical situations, and a calculation and comparison circuit (385) for validating the transformation or not, depending on whether the approximation error resulting from this transformation is large or small.

4. A device as claimed in one of the Claims 1 to 3, characterized in that it comprises means for controlling the re-initialization of the transformation procedure, subject to the validity thereof as before, but this time for each set of three successive control points of the contour of each region considered and until the contour loop is completely closed again.

**Patentansprüche**

1. Vorrichtung zum Kodieren von unbeweglichen Bildern mit Mitteln (10) zur Segmentierung der besagten Bilder in homogene Bereiche, denen eine spezifische Markietung und Mittel (20, 30) zum Kodieren des Inhalts und des Umrisses der besagten Bereiche gegeben wird, wobei die besagten Mittel zum Kodieren des Umrisses aus einem UnterEnsemble (30) der Informationskodierung des Umrisses bestehen, die wiederum Mittel (31, 32) zum Erfassen der Umrisse des zu kodierenden Bildes enthalten, dadurch gekennzeichnet, daß die besagten Mittel zum Kodieren des Umrisses zudem enthalten:

a) Mittel zum Erfassen am Umriß jedes aufeinanderfolgend betrachteten Bereichs von dreifachen Punkten, die zumindest zu zwei Bereichskonturen gehören und dazu dienen, eine Punktreihe zur Kontrolle des besagten betrachteten Bereichs zu bilden;

b) auf der Grundlage geometrischer Gültigkeitskriterien bedingte Umwandlungsmittel in ein gerades Segment jedes der Fragmente des Umrisses, an zwei aufeinanderfolgende Kontrollpunkte in der verfolgten Richtung des Umrisses heranreichend, wobei mindestens ein zusätzlicher Kontrollpunkt in die besagte Reihe zwischen die beiden betreffenden Kontrollpunkte eingefügt wird, wenn mindestens eines der Gültigkeitskriterien nicht erfüllt wird, und dies, bis sie es werden, und wobei die besagte Umwandlung auf jedes aufeinanderfolgende Kontrollpunktepaar angewandt wird, bis zur vollständigen Umrundung des Umrisses, und dann dementsprechendes Vorgehen für alle Bereiche jedes Bildes;

c) Mittel zum Kodieren des polygonalen Umrisses, gebildet durch die so erhaltene Segmentfolge.

2. Vorrichtung nach Anspruch 1 dadurch gekennzeichnet, daß die besagten Mittel zum Erfassen der Kontrollpunkte für jeden erfaßten Bereichsumriß eine von diesem Umriß gefolgte Schaltung (34), einen Speicher (35) der Koordinaten der nacheinander auf diesem Umriß vorgefundenen Bildpunkte, auf diesem Umriß eine Schaltung zum Erfassen der mindestens an drei Regionen angrenzenden dreifachen Punkte und einen Speicher (37) zum Abspeicher dieser dreifachen Punkte, ebenfalls mit dem Ausgang des Speichers (35) der Umrißkoordinaten des aktuell betrachteten Bereichs verbunden.

3. Vorrichtung nach einem der Ansprüche 1 und 2, dadurch gekennzeichnet, daß die besagten Umwandlungsmittel aus einer Teststufe (38) bestehen, die wiederum zwei Kennzeichnungsspeicher (381, 382) zum Abspeichern der jeweiligen Kennzeichnung vor und nach ihrer Umwandlung enthält, eine Schaltung (383) zum Bestimmen der den an den aktuellen Bereich angrenzenden Bereich entsprechenden Kennzeichnungen, eine Vergleichsschaltung (384) zum Verbieten der besagten Umwandlung bei einer bestimmten Anzahl vorbestimmter geometrischer Situationen, und eine Rechen- und Vergleichsschaltung (385) zur Validierung oder nicht der Umwandlung je nach dem mehr oder weniger großen Wert des Annäherungsfehlers, der dieser Umwandlung entspringt.

4. Vorrichtung nach einem der Ansprüche 1 bis 3, dadurch gekennzeichnet, daß sie Mittel zur Steuerung der Neuinitialisierung des Umwandlungsverfahrens enthält, wie zuvor unter dem Vorgehalt deren Validität, doch diesmal für jeden aufeinanderfolgenden Satz dreier Kontrollpunkte des Umrisses jeder betrachteten Region und bis zur vollständigen Umrundung des Umrisses.

FIG.1

FIG.3

FIG.4

FIG.5

FIG.2

FIG.6

FIG.7

FIG.8

FIG.9

FIG.10

FIG.11

FIG.12